# EUROPÄISCHE PATENTANMELDUNG

(11) **EP 1 760 644 A1**
(43) Veröffentlichungstag der Anmeldung: **07.03.2007**
(21) Anmeldenummer: 05018754.1
(22) Anmeldetag: 30.08.2005
(51) Int. Cl.: G06Q 10/00

(54) **Datenaustauschsystem für die Verfolgung von Mehrweg-Transportverpackungen**

(71) Anmelder: STECO Logistic GmbH, 4812 Pinsdorf (AT)
(72) Erfinder: Putzinger, Wolfgang, 4673 Gospoltshofen (AT); Edthofer, Walter, 4810 Gmunden (AT)
(74) Vertreter: Ofner, Clemens

(57) **Zusammenfassung**

Die Erfindung beschreibt ein Datenaustauschsystem (16) für die fortlaufende Erfassung bzw. Steuerung von Warenflüssen (5) zwischen mehr als zwei Unternehmen (2) mit einem im Regelfall unidirektionalen Kreislauf (1) von Waren, wobei jedes der in den Warenkreislauf (1) einbezogenen Unternehmen (2) mit zumindest einem elektronischen Endgerät (22) zum Absenden und Empfangen von Daten ausgestattet ist. Das elektronische Endgerät (22) ist zumindest fallweise mit einer Zentralrecheneinheit (25) verbunden, welche mindestens ein Computerprogramm-Produkt (17) zur Verfügung stellt, mit dem eine zentrale Datenbank (18) über ein Kommunikationsmedium (24) geändert bzw. gelesen werden kann, und welche Datenbank (18) Daten betreffend Eingänge und/oder Abgänge von Mehrweg-Transportverpackungen (4) sowie Daten von in den Warenkreislauf einbezogenen Unternehmen (2) enthält, wobei Daten getätigter oder vorgesehener zukünftiger Lieferungen oder von Lagerbeständen von Mehrweg-Transportverpackungen (4) mit oder ohne Erzeugnis (10) eines ersten Unternehmens (2) zumindest einem weiteren Unternehmen (2), vorzugsweise einem dem ersten Unternehmen (2) im Warenfluss (5) vor- oder nachgeordneten Unternehmen (2), mittels der Datenbank (18) und/oder dem Computerprogramm-Produkt (17) bereitgestellt sind.

## Beschreibung

Die Erfindung betrifft ein Datenaustauschsystem gemäß dem Oberbegriff von Anspruch 1 und ein Verfahren, wie es im Anspruch 15 beschrieben wird.

Es sind verschiedenste Datenübertragungssysteme zwischen in Geschäftsbeziehung stehenden Unternehmen bekannt. Bei diesen Ausführungen werden die Daten, wie z.B. Bestelldaten, in die Homepage des jeweiligen Unternehmens eingetragen und durch Betätigung einer Schaltfläche für die Absendung des Datensatzes übertragen. Dabei sind die in die Datenbank eingetragenen Daten nur dem eintragenden Unternehmen und dem die Homepage unterhaltenden Unternehmen zugänglich. Weiters sind Systeme zur Datenbereitstellung bekannt, bei denen Verkäufer Daten auf einer Homepage eines Handelsunternehmens zur Anzeige bringen können, welche dann von einer Mehrzahl von Kunden abgerufen werden können. Bei diesen Systemen wird nur von einem einmaligen, unidirektionalen Warenfluss ausgegangen, sodass die Bedürfnisse eines Warenkreislaufes, welcher Mehrweg-Produkte umfasst, nicht berücksichtigt werden. Die bei einem derartigen Warenkreislauf mit Mehrweg-Transportverpackungen entstehenden komplexeren Unternehmensbeziehungen erfordern daher hohen manuellen Aufwand, um die vielfältigen Transfers der jeweiligen Daten betreffend die Warenflüsse bewältigen zu können und die Daten so aufbereiten zu können, dass ein gezieltes Eingreifen in den Warenkreislauf möglich wird.

Unabhängig davon müssen manuelle Aufzeichnungen geführt werden und die entsprechenden Belege bzw. Dokumente, die den Umschlag bzw. die Bewegung des zu beobachtenden Produktes, insbesondere von mehrmals verwendbaren Mehrweg-Transportverpackungen beschreiben, zuvor erstellt und nachfolgend noch archiviert werden. Eine Auswertung dieser archivierten Belege ist zeitaufwendig und birgt die Gefahr von fehlerhaften Bearbeitungen.

Nicht zuletzt aufgrund der Tatsache, dass die einzelnen miteinander vernetzten Unternehmen weitläufig oder sogar global verteilt sein können, ist erkennbar, dass die entsprechenden Warenkreisläufe relativ komplexe Gestalt annehmen können und es insbesondere für einen sogenannten Poolbetreiber, der Verleiher bzw. Besitzer von Mehrweg-Transportverpackungen sein kann, schwierig bzw. mit größerem Aufwand verbunden ist, sich jederzeit einen Überblick zu verschaffen bzw. zu geordneten Warenkreisläufen beitragen zu können.

Der vorliegenden Erfindung liegt die Aufgabe zugrunde, eine Methode bzw. ein System zu schaffen, mit dem zumindest der Verleiher bzw. Besitzer den Warenfluss seiner Waren, insbesondere seiner Mehrweg-Transportverpackung, verfolgen bzw. steuern kann.

Diese Aufgabe der Erfindung wird durch ein Datenaustauschsystem gemäß den Merkmalen des Anspruches 1 und durch ein Verfahren nach Anspruch 15 gelöst.

Die sich aus den Merkmalen dieser Ansprüche ergebenden Vorteile liegen darin, dass es dadurch möglich geworden ist, die betreffenden Warenflüsse zwischen in Geschäftsbeziehung stehenden Unternehmen in einfacher Art und Weise lückenlos zu erfassen und ohne wesentlichen Zusatzaufwand über eine zentrale Datenbank an die entsprechende Gegenstelle oder an mehrere Gegenstellen zu übermitteln. An den Gegenstellen, an welchen die Datensätze betreffend die erfolgten Warenbewegungen abgerufen werden, können dann automatische Auswertungen vorgenommen werden. So ist es z.B. für den Betreiber des Systems bzw. den Besitzer oder Verleiher der in Umlauf gebrachten Waren bzw. Mehrweg-Produkte, insbesondere der Mehrweg-Transportverpackungen, jederzeit möglich zu eruieren, an welchem Ort bzw. bei welchen Kunden bzw. Abnehmern oder Lieferanten welche Menge an Waren bzw. Mehrweg-Produkte vorliegt. Insbesondere kann an einer zentralen Datenempfangsstelle für die Bewegungsdatensätze jederzeit festgestellt werden, an welchem Ort wie viele der für einen stetigen Verwendungs- bzw. Bearbeitungskreislauf vorgesehenen Mehrweg-Produkte vorliegen. Die Erfindung eignet sich besonders zur Erfassung und Beobachtung der Bewegungen von Mehrweg-Transportverpackungen, welche mehrfach verwendet und den vorgesehenen Verwendungs- bzw. Gebrauchszyklus wenigstens einmal durchlaufen sollen. Das erfindungsgemäße Datenaustauschsystem kann beim Poolbetreiber gegebenenfalls auch zur Vereinfachung bzw. Verbesserung der Abrechnungsmöglichkeiten verwendet werden. Für die sonstigen Teilnehmer an diesem Datenaustauschsystem ist es vorteilhaft, dass ihnen eine Lagerbestandsverwaltung als Zusatznutzen zur Verfügung steht.

Die sich bei dem Verfahren zum Austausch von Daten nach Anspruch 15 ergebenden Vorteile liegen darin, dass den in den Warenfluss einbezogenen Warenfluss eingezogenen Unternehmen ein Verfahren zur Verfügung gestellt wird mit dem ein erstes Unternehmen Daten eingegangener, abgeschickter oder lagernder Waren, insbesondere betreffend Mehrweg-Transportverpackungen mit oder ohne Produkt, zu einer Datenbank senden kann und ein zweites, berechtigtes Unternehmen, insbesondere ein Unternehmen, welches im Warenfluss vor- oder nachgeordnet ist, die Daten abrufen kann. Vorteilhaft ist dabei, dass nicht jedes einzelne Unternehmen eine eigene Datenbank installieren muss, die die Daten betreffend die Lieferungen beinhaltet, sodass aufwendige Wartungsarbeiten der Datenbank bei den einzelnen Unternehmen wegfallen. Unter Wartungsarbeiten sind z.B. eine Datenpflege bzw. Datenreorganisation und Sicherungsarbeiten für die Datenbank zu verstehen, wofür in der Regel besondere Fachkenntnisse bzw. Fachleute erforderlich wären. Weiters ist von Vorteil, dass durch die Verwendung einer gemeinsamen Datenbank für mehrere Unternehmen eine Synchronisation von Datenbanken, die sich bei den einzelnen Unternehmen befinden, entfällt. Die Wartung der Datenbank und die Sicherung der Daten der Datenbank kann von einer zentralen Stelle aus erfolgen und führt zu einer Kostenersparnis bei den einzelnen Unternehmen.

Ein besonderer Vorteil der angegebenen Lösung liegt auch darin, dass bei den einzelnen Unternehmen keine aufwendige Software-Installation an einem bestimmten Endgerät bzw. Computer erforderlich ist, sondern lediglich ein standardmäßiges Kommunikationsmedium, insbesondere das Internet, verfügbar sein muss.

Es ist vorteilhaft, wenn die Unternehmen durch wenigstens einen Poolbetreiber und Besitzer der Mehrweg-Transportverpackung, durch wenigstens ein Verpackungs- und/oder Produktionsuntemehmen, beispielsweise einen Landwirt, und durch wenigstens ein Handelsunternehmen, wie z.B. eine Großmarktkette, definiert sind, da dadurch standardisierte Geschäftsbeziehungen zwischen den Unternehmen vorliegen, welche von dem durch die Zentralrecheneinheit zur Verfügung gestellten, elektronisch verarbeitbaren Computerprogramm-Produkt automatisch berücksichtigt werden können.

Weiter ist es möglich, dass der bevorzugte Warenkreislauf durch Warenflüsse ausgehend vom Poolbetreiber zum Verpackungs- und/oder Produktionsunternehmen, weiter zum Handelsunternehmen und zurück zum Poolbetreiber definiert ist. Die sich in einen derartigen Warenkreislauf befindlichen Transportverpackungen können nach dem Gebrauch durch Verpackungs- und/oder Produktionsunternehmen und Handelunternehmen vom Poolbetreiber gereinigt und gewartet werden und als Mehrweg-Transportverpackung wiederverwendet werden.

Es ist auch möglich, dass die zumindest fallweise Verbindung des Endgerätes mit der Zentralrecheneinheit zumindest teilweise über ein globales Kommunikationsmedium, insbesondere über das Internet, hergestellt ist. Damit kann das Endgerät weltweit mit der Zentralrecheneinheit verbunden werden und ein globaler, ortsunabhängiger Zugriff auf die Datenbank ermöglicht werden.

Eine weitere Ausbildung sieht vor, dass die zumindest fallweise Verbindung des Endgerätes mit der Zentralrecheneinheit zumindest teilweise über ein drahtloses Kommunikationsmedium, insbesondere durch ein einen GSM- (Global System for Mobile Communications), UMTS- (Universal Mobile Telecommunication System), GPRS- (General Paket Radio Service), EDGE- (Enhanced Data rates for GSM Evolution), MMS- (Multimedia Messaging Service), SMS- (Short Message Service), HSCSD- (High Speed Circuit Switched Data), WAP-(Wireless Application Protocoll), Blutetooth-Standard oder einen Standard der IEEE 802.11-Familie ausnützendes Kommunikationsmedium, hergestellt ist. Das Endgerät ist dadurch ortsungebunden und kann beispielsweise von einem Landwirt bei der Ernte der Anbauprodukte mitgeführt werden. Weiters ergibt sich daraus der Vorteil, dass die Daten der Datenbank beispielsweise durch ein sich in einem Lastkraftwagen eines Transportunternehmens befindliches Endgerät oder ein mit einer Lieferung mitgeführtes Endgerät abgerufen werden können.

Von Vorteil ist auch, wenn die Zentralrecheneinheit mit einem Webserver ausgestattet ist und das zur Verfügung gestellte Computerprogramm-Produkt für die Unternehmen eine Software, insbesondere eine Software in Form mindestens einer Internetseite, die bevorzugt serverseitig ausführbaren Programmcode enthält, gebildet ist, durch die die Datenbank geändert bzw. gelesen werden kann, sodass die Software beispielsweise von einem handelsüblichen Personalcomputer, der mit einer Datenübertragungsvorrichtung, insbesondere einer Netzwerkkarte oder einem Modem, ausgestattet ist, abgerufen werden kann. Von besonderem Vorteil ist dabei, dass das Datenaustauschsystem mittels einem standardmäßigen Betriebssystem oder einem für die Anzeige von Internetseiten geeigneten, üblicherweise vorinstallierten, Programm abgearbeitet oder zumindest teilweise zur Anzeige gebracht werden kann. Der Installations- bzw. Einrichtungsaufwand bei einem am Datenaustauschsystem teilnehmenden Unternehmen reduziert sich dadurch erheblich bzw. ist der diesbezügliche Aufwand nahezu Null.

Es ist weiters möglich, dass das mindestens eine elektronische Endgerät durch eine Recheneinheit, insbesondere durch einen Personal-Computer, gebildet ist. Das Endgerät kann bei dieser Ausbildung auch für weitere Steuerungs- und/oder Datenerfassungszwecke verwendet werden, die nicht unmittelbar mit einem Datenaustauschsystem für Mehrweg-Produkte zusammenhängen.

Eine vorteilhafte Ausbildung ist auch dadurch gegeben, dass das mindestens eine elektronische Endgerät durch eine mobile Recheneinheit, insbesondere einen Laptop, PDA (Personal Digital Assistant), MDA (Mobile Digital Assistant), Handheld, Wristtop-Computer oder ein Mobiltelefon, gebildet ist. Damit kann das elektronische Endgerät zu Produktions- bzw. Lagerstätten mitgeführt werden, wodurch sich der Vorteil ergibt, dass die ansonsten händischen Aufzeichnungen, z.B. in Papierform, entfallen können. Ein MDA bietet zusätzlich die Möglichkeit, jederzeit via das Kommunikationsmedium, insbesondere via Internet, mit der Zentralrecheneinheit bzw. der Datenbank in Verbindung zu sein.

Es ist weiters möglich, dass zumindest fallweise eine Einrichtung zur Herstellung, zur Reinigung, zur Handhabung, zum Verpacken, zum Verschicken, zum Bearbeiten und/oder zum Entsorgen von Mehrweg-Transportverpackungen bzw. ein Steuergerät für die Einrichtung mit dem Endgerät oder mit der Zentralrecheneinheit verbunden ist. Dadurch kann eine Einrichtung zur Herstellung, zur Reinigung, zur Handhabung, zum Verpacken, zum Verschicken, zum Bearbeiten und/oder zum Entsorgen von Mehrweg-Transportverpackungen ausgehend vom Endgerät oder von der Zentraleinheit gesteuert werden. Ein Benutzer des Datenaustauschsystems kann dadurch eine Vielzahl von Aktionen betreffend Mehrweg-Transportverpackungen, beispielsweise Herstellen, Reinigen, Handhaben, Verpacken, Verschicken, Bearbeiten und/oder Entsorgen, von einem zentralen Arbeitsplatz aus steuern bzw. überwachen.

Eine weitere Ausbildung sieht vor, dass die Einrichtung bzw. das Steuergerät einen Zugriff auf die Daten der Datenbank hat. Dadurch kann aufgrund der Daten der Datenbank automatisiert gesteuert bzw. geregelt werden, welche Aktion durchgeführt werden soll.

Vorteilhaft ist, wenn das Computerprogramm-Produkt bzw. die Software mindestens eine Programmmaske zur Eingabe und/oder Ausgabe von Daten zumindest betreffend Lieferungen oder einen Lagerbestand aufweist, sodass eine einfache und schnelle Bedienbarkeit des Computerprogramm-Produktes gegeben ist.

Eine vorteilhafte Ausbildung sieht vor, dass die Programmmaske zur Eingabe oder Ausgabe von Daten betreffend einen zukünftigen Eingang oder Abgang von Mehrweg-Transportverpackungen ausgebildet ist. Dadurch kann einem im Warenfluss nachgeordnetes Unternehmen die Art und der Zeitpunkt einer Lieferung vorangekündigt bzw. avisiert werden. Weiters kann dadurch einem im Warenfluss vorgeordnetes Unternehmen die Ankunft einer Lieferung komfortabel bestätigt werden.

Vorteilhaft ist auch eine Ausbildung, bei der das von der Zentralrecheneinheit bereitgestellte Computerprogramm-Produkt dazu ausgebildet ist, eine Nachricht eines ersten Unternehmens in die Datenbank zu schreiben und die Nachricht einem zweiten Unternehmen, welches auf grund einer Benutzerkennung und/oder eines Passwortes zum Abfragen dieser Nachricht berechtigt ist, bereitstellt bzw. das Computerprogramm-Produkt, insbesondere die Software, einen Menüpunkt aufweist, durch den bereitgestellte Nachrichten auf einem Anzeigegerät, insbesondere einem Bildschirm, dargestellt werden können. Somit wird es den Unternehmen ermöglicht, über die zentrale Datenbank Nachrichten auszutauschen. Die Nachrichten können Informationen über ein Unternehmen, insbesondere Werbeankündigungen, beinhalten oder Bestellungen in elektronischer Form sein. Besonders vorteilhaft erweist sich dabei, dass alle teilhabenden Unternehmen in der Datenbank registriert sind und somit eine genaue Rückverfolgung von Bestellungen ermöglicht wird

Ein weiterer vorteilhafter Verfahrensschritt sieht vor, dass die Daten auf der Datenbank durch zumindest ein Endgerät oder Steuergerät eines zweiten, berechtigten Unternehmens, insbesondere einem Unternehmen, welches im Warenfluss vor- oder nachgeordnet ist, erfasst werden. Dadurch kann ein berechtigtes Unternehmen die Informationen in der Datenbank nutzen, um eine verbesserte Arbeitsplanung im Voraus durchführen zu können. Insbesondere kann ein im Warenfluss nachgeordnetes Unternehmen mit dem Endgerät Daten abrufen, die ein im Warenfluss vorgeordnetes Unternehmen in der Datenbank hinterlegt hat, wodurch eine Vorankündigung einer Lieferung ermöglicht wird. Ebenfalls kann durch diese Ausbildung ein im Warenfluss vorgeordnetes Unternehmen einen Bedarf feststellen und eine gezielte Produktions- und Logistikplanung durchführen.

Es ist auch möglich, dass die Daten durch das zumindest eine Endgerät oder Steuergerät an ein Ausgabegerät, insbesondere ein Bildschirm, ein Drucker oder ein Display, und/oder an eine Einrichtung, die Mehrweg-Transportverpackungen herstellt, reinigt, handhabt, verpackt, verschickt, bearbeitet oder entsorgt, angepasst und weitergegeben werden. Dadurch kann vom Steuergerät oder vom Endgerät durch Anpassung und Weitergabe der Daten eine Anlage gesteuert werden, welche automatisch die Mehrweg-Transportverpackungen bearbeitet oder handhabt. Beispielsweise können mit einem Drucker automatisch Etiketten gedruckt werden oder es kann automatisch eine benötigte Anzahl von Mehrweg-Transportverpackungen gereinigt, verpackt und verschickt werden.

Eine weitere Ausbildung sieht vor, dass das Computerprogramm-Produkt von der Zentralrecheneinheit bzw. von einer auf der Zentralrecheneinheit ausgeführten Software vor dem Verschicken an ein Endgerät verändert wird. Dadurch ist es möglich, das Computerprogramm-Produkt jederzeit an verschiedene Gegebenheiten anzupassen. Das Computerprogramm-Produkt kann dadurch beispielsweise für ein Verpackungs- und Produktionsunternehmen andere Merkmale aufweisen, als die für ein Handelsunternehmen bevorzugten Merkmale.

Vorteilhaft ist auch, wenn durch das Computerprogramm-Produkt bzw. die Software nur einem zuvor in einer Filtermaske festgelegten Kriterium genügende Daten aus der Datenbank zum Endgerät übertragen werden. Dadurch wird eine gezielte Reduktion der Datenmenge ermöglicht und eine Erleichterung der Bearbeitung geschaffen.

Bei einer weiteren vorteilhaften Verfahrensart wird allen erfolgreich übertragenen Daten bzw. Datensätzen eine unverkennbare, eindeutige Transferidentifikation zugeordnet. Dadurch wird eine einfache und eindeutige Protokollierung der Daten-Übermittlung ermöglicht.

Eine weitere Vorgehensweise sieht vor, alle Datenzugriffe und Fehler einer Datenübertragung in einem Statusbericht auf einem nicht flüchtigen Schreib- und Lesespeicher, insbesondere auf einer Festplatte, zu speichern, sodass eine fehlerhafte Übertragung bzw. eine fehlerhafte Verbindung nicht zu einem Datenverlust führt und Verbindungsaktionen genauer rückverfolgt werden können, sodass Fehler zeitsparender behoben werden können

Vorteilhaft ist auch eine Verfahrensvariante, bei der nach Auswahl oder Eingabe eines Kunden oder Lieferanten in der Programmmaske für die Datensätze automatisch die standardmäßige Richtung des Warenflusses vorgeschlagen wird, sodass eine Eingabeerleichterung erzielt werden kann.

Weitere mögliche Verfahrensschritte sehen vor, dass der Lagerbestand an Mehrweg-Transportverpackungen eines Unternehmens zumindest teilweise automatisiert festgestellt wird bzw. für ein oder mehrere Unternehmen ein Solllagerbestand festgelegt wird und bei Unterschreitung des Solllagerbestandes zumindest teilweise automatisiert Mehrweg-Transportverpackungen an das Unternehmen geschickt werden bzw. bei einer Warenbestellung eines Handelsunternehmen bei einem Verpackungs- und/oder Produktionsunternehmen zumindest teilweise automatisiert festgestellt wird, ob beim Verpackungs- und/oder Produktionsunternehmen ausreichend Mehrweg-Transportverpackungen für die Abwicklung der Warenbestellung vorhanden sind und dem Verpackungs- und/oder Produktionsunternehmen bei Bedarf oder Mangel an Mehrweg-Transportverpackungen zumindest teilweise automatisiert Mehrweg-Transportverpackungen geliefert werden. Durch die automatische Feststellung eines Lagerbestandes kann der Poolbetreiber jederzeit die Anzahl der sich im Umlauf befindlichen Mehrweg-Transportverpackungen abrufen. Sobald ein Solllagerbestand eines Unternehmens unterschritten wird, kann beispielsweise durch eine Verwaltung für Mehrweg-Transportverpackungen ein Versand der Mehrweg-Transportverpackungen zu dem betreffenden Unternehmen eingeleitet werden.

Eine weitere vorteilhafte Verfahrensvariante sieht vor, dass ein Unternehmen, das einen Bedarf an Mehrweg-Transportverpackungen hat, von einem Unternehmen, das einen Überschuss an Mehrweg-Transportverpackungen hat, unter Berücksichtigung einer mittels der Datenbank ermittelten geografischen Nahebeziehung beliefert wird. Dadurch können Transportwege erheblich verkürzt werden, Transportkosten gespart werden und Umweltbelastungen durch den Transport minimiert werden.

Die Erfindung wird im nachfolgenden anhand der in den Zeichnungen dargestellten Ausführungsbeispiele näher erläutert.

Es zeigen:
- Fig. 1: einen beispielhaft dargestellten, in sich geschlossenen Produktkreislauf;
- Fig. 2: einen mehrfach verzweigten Produktkreislauf zwischen mehreren Unternehmen unterschiedlicher Type;
- Fig. 3: ein Hauptmenü mit Aviso-Anzeige;
- Fig. 4: eine Programmmaske zur Erfassung von Bewegungsdaten, betreffend ausgelieferte und erhaltene Mehrweg-Transportverpackungen;
- Fig. 5: eine Programmmaske zum Abrufen von Daten über die bisher erfolgten Bewegungen der Mehrweg-Transportverpackungen;
- Fig. 6: eine Programmmaske zum Abrufen von Lagerbeständen der verschiedenen Mehrweg-Transportverpackungen.

Einführend sei festgehalten, dass in den einzelnen Graphiken gleiche Elemente mit gleichen Bezugszeichen bzw. gleichen Bauteilbezeichnungen versehen werden, wobei die in der gesamten Beschreibung enthaltenen Offenbarungen sinngemäß auf gleiche Elemente mit gleichen Bezugszeichen übertragen werden können. Weiters wird darauf hingewiesen, dass die verwendeten Relativangaben, wie z.B. darunter, darüber usw., bildlich zu verstehen sind und keine realen Lageangaben sind. Weiters können auch Einzelmerkmale oder Merkmalskombinationen aus den gezeigten und beschriebenen Ausführungsbeispielen für sich eigenständige, erfinderische oder erfindungsgemäße Lösungen darstellen.

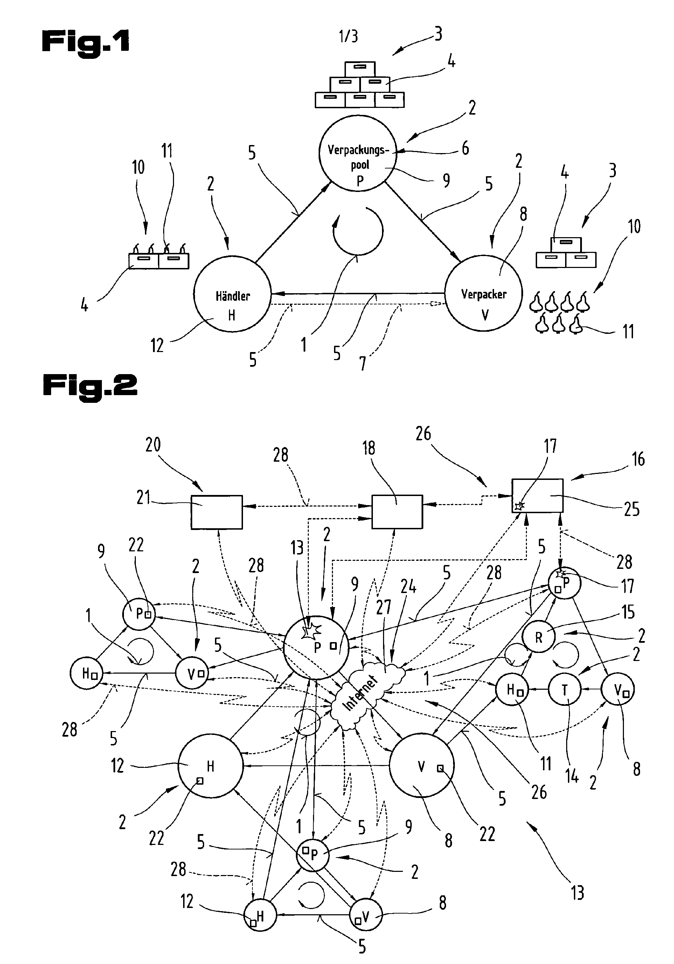

In Fig. 1 ist ein typischer, üblicherweise unidirektionaler Warenkreislauf 1 zwischen mehreren Unternehmen 2 unterschiedlichen Typs veranschaulicht. Der Warenkreislauf 1 eines mehrfach verwendbaren Mehrwegprodukts 3, insbesondere einer Mehrweg-Transportverpackung 4, ist typischerweise in sich geschlossenen und wird wenigstens einmal durchlaufen.

Im Regelfall ist der Warenkreislauf 1, in welchen das Mehrwegprodukt 3 eingebunden ist, durch einen unidirektionalen Warenfluss 5 definiert, d.h. das Mehrwegprodukt 3 kehrt erst nach dem vollständigen Durchlaufen des gesamten Warenkreislaufes 1 wieder an seinen Ursprungs- bzw. Ausgangspunkt 6 zurück. In Einzelfällen, insbesondere bei Produktreklamationen, kann es auch vorkommen, dass in Teilabschnitten des Warenkreislaufes 1 Rücksendungen 7 auftreten und dadurch zumindest partiell ein bidirektionaler Warenfluss 5 im Warenkreislauf 1 entsteht, wie dies mit einer in strichlierten Linien dargestellten Pfeilspitze angedeutet wurde.

An diesem Warenkreislauf 1 für die Mehrweg-Transportverpackung 4 sind mehrere Unternehmen 2 unterschiedlichen Typs mit jeweils verschiedenen Aufgabenbereichen beteiligt. Die Unternehmen 2 können dabei durch Dienstleistungs- als auch durch Produktionsunternehmen 8 gebildet sein.

Bei der bevorzugten Ausführungsform ist das Unternehmen 2, welches den Ausgangspunkt 6 des Warenflusses 5 darstellt, durch einen Poolbetreiber 9 gebildet, welcher eine bestimmte Menge und/oder Type von Mehrweg-Transportverpackungen 4 einem weiteren Unternehmen 2, insbesondere einem Verpackungs- und/oder Produktionsunternehmen 8, zu dessen Verwendung zur Verfügung stellt. Die Bereitstellung dieser Mehrweg-Transportverpackung 4 erfolgt dabei entgeltlich, wobei dieses vom Poolbetreiber 9 eingehobene Entgelt für die Mehrweg-Transportverpackung 4 nicht die Mehrweg-Transportverpackung 4 an sich umfasst, sondern vielmehr als Benutzungsentgelt zu definieren ist.

Zur Sicherstellung, dass die in Umlauf gebrachte Mehrweg-Transportverpackung 4 im Warenfluss 5 verbleibt und nicht anderweitig genutzt oder unter Umständen sogar zerstört wird, wird die ausgegebene Mehrweg-Transportverpackung 4 mit einem Pfand belegt. Im Regelfall werden jedoch hinsichtlich dieses Pfandsystems zwischen den Unternehmen 2 keine monetären Werte bewegt, bzw. keine Geldbuchungen vorgenommen, sondern wurde bisher lediglich über die Art und Anzahl der bewegten Mehrweg-Transportverpackungen 4 via Handaufzeichnungen und Belege manuell buchgeführt, was einen hohen Verwaltungsaufwand nach sich zog.

Das Verpackungs- und/oder Produktionsunternehmen 8 ist beispielsweise durch einen Landwirtschaftsbetrieb gebildet, welcher Erzeugnisse 10, beispielsweise Anbauprodukte 11, in die entsprechenden Mehrweg-Transportverpackungen 4 gibt bzw. hiermit transportfertig verpackt. Die mit den Erzeugnissen 10 befüllten Mehrweg-Transportverpackungen 4 gelangen dann im Warenfluss 5 zu einem weiteren Unternehmen 2. Dieses weitere Unternehmen 2 ist vorzugsweise durch ein Handelsunternehmen 12 gebildet, welches zumindest die Erzeugnisse 10 des Verpackungs- und/oder Produktionsunternehmens 8 vertreibt bzw. Endverbrauchern anbietet.

Das Handelsunternehmen 12 kann beispielsweise durch eine Großmarktkette gebildet sein, welche Waren und Produkte für den täglichen Lebensbedarf anbietet. Die angebotenen Erzeugnisse 10 bzw. Anbauprodukte 11 können dabei durch Obst- und/oder Gemüseprodukte gebildet sein, welche dem Endverbraucher bzw. Konsumenten über das Handelsunternehmen 12 - gegebenenfalls auch direkt - in der zumindest für den Transport verpackten Mehrweg-Transportverpackung 4 angepriesen werden können. Die nachfolgend von den Handelsunternehmen 12 bzw. von weiteren Vertriebsunternehmen entleerten bzw. frei gewordenen Mehrweg-Transportverpackungen 4 werden dann dem Poolbetreiber 9 gesammelt rückübermittelt. Der Poolbetreiber 9 reinigt - und falls erforderlich - repariert die üblicherweise von wenigstens einem Handelsunternehmen 12 rückübermittelten Mehrweg-Transportverpackungen 4 und stellt diese anschließend für eine erneute Auslieferung an ein Verpackungs- und/oder Produktionsunternehmen 8 bereit. Die Mehrweg-Transportverpackung 4 hat nun den Warenreislauf 1 einmal durchlaufen und steht für wenigstens eine erneute Verwendung zur Verfügung.

Eine Mehrweg-Transportverpackung 4 scheidet üblicherweise erst dann aus dem Warenkreislauf 1 aus, wenn diese defekt, irreparabel, unansehnlich oder allmählich verschlissen ist: Nachdem die Mehrweg-Transportverpackungen 4 bevorzugt aus Kunststoff hergestellt sind, werden solche ausgeschiedenen Mehrweg-Transportverpackungen 4 bevorzugt recycelt und wird der gewonnene Rohstoff zur Erzeugung neuer Mehrweg-Transportverpackungen 4 verwendet.

Unter dem Begriff Mehrweg-Transportverpackung 4 sind dabei eine Reihe von Verpackungen aus Kunststoff, insbesondere Kisten, Trays, Stapelzwischenlagen, Paletten, Kunststoffflaschen, Becher oder sonstige Behältnisse aus Kunststoff zu verstehen. Besonders geeignet sind im Anschluss an die Entleerung zusammenklappbare Behältnisse bzw. Kisten, da dadurch deren Transportvolumen erheblich reduziert werden kann und somit bei einer einzigen Rücklieferung zahlreiche Leerverpackungen dem Poolbetreiber 9 gesammelt übergeben werden können.

Der Einfachheit und zum besseren Verständnis der Zusammenhänge wegen, ist in Fig. 1 ein in sich geschlossener, homogener Warenkreislauf 1 zwischen drei beispielhaften Unternehmen 2 veranschaulicht worden.

In Fig. 2 hingegen ist ein mehrfach verzweigter Warenkreislauf 1 zwischen einer Vielzahl von Unternehmen 2 unterschiedlichen Typs dargestellt. Diese vergleichsweise komplexeren Warenflüsse 5 kommen dabei in der Praxis wesentlich häufiger vor. Über einzelne Pfade innerhalb eines derartigen Netzwerkes 13 aus mehreren, örtlich weitläufig voneinander distanzierten Unternehmen 2 können die jeweiligen Waren bzw. Produkte, insbesondere die Mehrweg-Transportverpackungen 4 und/oder die sich darin befindlichen Erzeugnisse 10, bewegt werden.

In dieses Netzwerk 13 sind wiederum mindestens drei unterschiedliche Typen von Unternehmen 2, insbesondere wenigstens ein Poolbetreiber 9, wenigstens ein Verpackungs-und/oder Produktionsunternehmen 8 und wenigstens ein Handelsunternehmen 12 integriert.

Selbstverständlich ist es auch möglich, dass zum Aufbau eines derartigen Warenflusses 5 mehr als drei unterschiedliche Unternehmen 2 erforderlich sind. So ist es z.B. möglich, dass innerhalb des Warenkreislaufes 1 mehr als drei unterschiedliche Typen von Unternehmen 2 erforderlich sind. Beispielsweise kann bezugnehmend auf die übliche Richtung des Warenflusses 5 dem Handelsunternehmen 12 ein weiteres Unternehmen 2 für den Endvertrieb nachgeordnet sein. Ebenso ist es möglich, dass ein Transportunternehmen 14 in den Warenkreislauf 1 eingebunden ist. Ebenso ist es möglich, dass einzelnen Poolbetreibern 9 bezugnehmend auf den Warenfluss 5 ein gesondertes Reinigungsunternehmen 15 vorgeordnet ist. Insbesondere kann der Warenfluss 5 ausgehend von einem beliebigen Unternehmen 2, beispielsweise ausgehend von einem Verpackungs- und/oder Produktionsunternehmens 8 an verschiedenste bzw. an mehrere Handelsunternehmen 12 gerichtet sein. Ebenso ist es selbstverständlich möglich, dass ein Poolbetreiber 9 von mehreren verschiedenen Handelsunternehmen 12 die verliehenen Mehrweg-Transportverpackungen 4 erhält. Ebenso können mehrere Poolbetreiber 9 im Netzwerk 13 integriert sein, wobei sogar zwischen den Poolbetreibern 9 Warenflüsse 5 stattfinden können. Speziell dieser Warenfluss 5 zwischen einzelnen Poolbetreibern 9 kann bidirektional erfolgen. Insbesondere können einzelne Poolbetreiber 9 die jeweils benötigten Mehrweg-Transportverpackungen 4 untereinander tauschen. Grundsätzlich ist es also gleichgültig, an welchen Poolbetreiber 9 ein Handelsunternehmen 12 die entleerte Mehrweg-Transportverpackung 4 retour sendet. Der Einfachheit halber wird hierbei der nächstgelegene bzw. der demnächst ohnedies anzufahrende Poolbetreiber 9 mit den entleerten Mehrweg-Transportverpackungen 4 beliefert. Die einzelnen Unternehmen 2 können dabei weitläufig verteilt angeordnet sein.

Erfindungsgemäß wird ein elektronisches Datenaustauschsystem 16 vorzugsweise in Kombination mit einem Computerprogramm-Produkt 17 und/oder einer Datenbank 18 verwendet, mit welchem Daten dieser komplexen Warenkreisläufe 1 bzw. Warenflüsse 5 ausgelesen und zumindest einer zentralen Stelle, insbesondere dem Poolbetreiber 9, für die weitere Verarbeitung bzw. Auswertung auf elektronischem Weg übermittelt werden können.

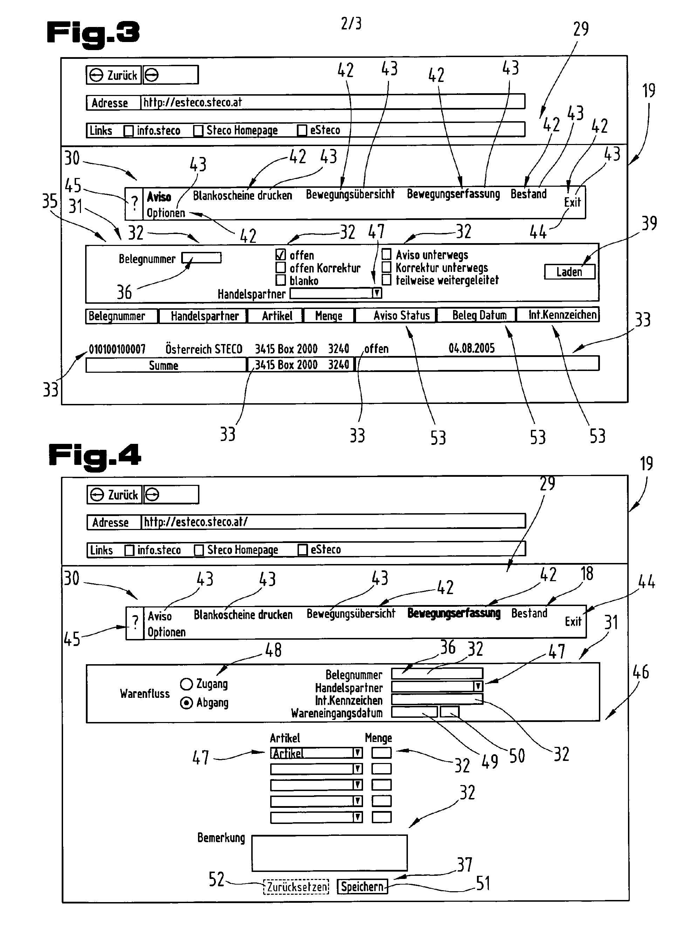

Insbesondere kann das Computerprogramm-Produkt 17 eine Programmmaske 19 (siehe Fig. 3 bis 6) für den Poolbetreiber 9 bereitstellen, mit welcher dieser feststellen kann, bei welchem Unternehmen 2 wie viele Mehrweg-Transportverpackungen 4 lagern oder benötigt werden. Der Poolbetreiber 9 kann damit zumindest teilweise automatisiert, beispielsweise Mehrweg-Transportverpackungen 4, verschicken und/oder eine Benützungsgebühr oder ein Pfand ermitteln. Das Produktionsunternehmen 8 kann über die Datenbank 19 einem Handelsunternehmen 12 die Menge der vom Produktionsunternehmen 8 an das Handelsunternehmen 12 geschickten Mehrweg-Transportverpackungen 4 mitteilen, sodass das Handelsunternehmen 12 entsprechende Vorkehrungen betreffend den Empfang, die Lagerung bzw. den Verkauf des vom Produktionsunternehmen 8 gesendeten Produktes bzw. Erzeugnisses 10 einleiten kann. Weiters kann der Poolbetreiber 9 den Warenfluss 5 ermitteln, und eine effiziente Logistikplanung durchführen.

Vorzugsweise können die in der Datenbank 18 erfassten Daten auch zur Steuerung von Logistik-Einrichtungen oder einer anderen Einrichtung 20, insbesondere einer Einrichtung 20 zur Herstellung, zur Reinigung, zur Handhabung, zum Verpacken, zum Verschicken, zum Bearbeiten und/oder zum Entsorgen von Mehrweg-Transportverpackungen 4, dienen. Dabei wird beispielsweise von einem Steuergerät 21 der Einrichtung 20, welches Zugriff auf die Datenbank 19 hat, festgestellt, welches Unternehmen 2 Bedarf an Mehrweg-Transportverpackungen 4 hat und eine entsprechende Anzahl von Mehrweg-Transportverpackungen 4 von einer Waschanlage gewaschen bzw. von einer Förderanlage aus einem Lager geholt und von einer Verpackungsmaschine absendefertig verpackt. Weiters kann durch die Einrichtung 20 ein Warnsignal ausgegeben werden, wenn ein dringender Bedarf an Mehrweg-Transportverpackungen 4 besteht.

Das Computerprogramm-Produkt 17 ist dabei auf einem elektronischen Endgerät 22, insbesondere auf einer handelsüblichen Recheneinheit 23 wie einem Personal-Computer oder auf einer mobilen Recheneinheit ausführbar. Das elektronische Endgerät 22 umfasst dabei zumindest eine Schnittstelle zu einem Kommunikationsmedium 24, eine Eingabevorrichtung, eine Ausgabevorrichtung, einen Prozessor, insbesondere einen Mikroprozessor, und zumindest ein Speichermedium. Das Computerprogramm-Produkt 17 ist dabei auf einer Zentralrecheneinheit 25 und dort bevorzugt auf einem nichtflüchtigen Speichermedium, insbesondere auf einer Festplatte, oder auf einem von mehreren Recheneinheiten 23 zugreifbaren Netzlaufwerk hinterlegt. Das derart gespeicherte Computerprogramm-Produkt 17 ist dabei von wenigstens einem elektronischen Endgerät 22 über ein lokales oder globales Datennetzwerk 26 lad- und ausführbar und von einem Benutzer mit entsprechenden Zugriffsberechtigungen bedienbar.

Jedes der in das Netzwerk 13 integrierten Unternehmen 2 ist mit einem entsprechenden elektronischen Endgerät 22, auf welchem das Computerprogramm-Produkt 17 ausführbar ist, ausgestattet. Jedes dieser elektronischen Endgeräte 22, welches das nachfolgend näher beschriebene Computerprogramm-Produkt 17 abruft und bevorzugt mittels einem Standard-Computerprogramm ausführt, hat Zugriff auf ein Kommunikationsmedium 24, mit welchem Daten zu wenigstens einer über das Kommunikationsmedium 24 verbundenen Datenbank 18 übertragen und von der Datenbank 18 empfangen bzw. ausgesandt werden können. Dieses Kommunikationsmedium 24, in welches die Endgeräte 22 mit dem zu ladenden Computerprogramm-Produkt 17 einbindbar sind, ist bevorzugt durch das sogenannte Internet 27 gebildet. Hierfür umfassen die Endgeräte 22 bevorzugt wenigstens eine Vorrichtung zur Datenübertragung 28, insbesondere ein Modem, eine Modemkarte, eine Netzwerkkarte oder eine Vorrichtung zur kabellosen Datenübertragung, die als Kommunikationsschnittstelle zum Kommunikationsmedium 24 dient.

Im Rahmen der Erfindung ist es auch möglich, jedes andere, eine globale Kommunikation ermöglichende Kommunikationsmedium 24 einzusetzen. Wesentlich ist lediglich, dass eine Fernübertragung von Daten und/oder Bild- bzw. Tonsignalen von einem der Unternehmen 2 im Netzwerk 13 zur zentralen Datenbank 18 der Zentralrecheneinheit 25 bzw. zu wenigstens einem weiteren Unternehmen 2 im Netzwerk 13 ermöglicht ist. Diese Fernübertragung kann dabei leitungsgebunden über Telefon- bzw. Datenkabel und/oder via ein Funknetz erfolgen. Die Fernübertragung durch das Funknetz kann dabei gemäß dem GSM- (Global System for Mobile Communications), UMTS- (Universal Mobile Telecommunication System), GPRS-(General Paket Radio Service), EDGE- (Enhanced Data rates for GSM Evolution), MMS-(Multimedia Messaging Service), SMS- (Short Message Service), HSCSD- (High Speed Circuit Switched Data), WAP- (Wireless Application Protocoll), Blutetooth-Standard oder einem Standard der IEEE 802.11-Familie erfolgen.

Das von der Zentralrecheneinheit 25, insbesondere von einer mit einem Webserver ausgestatten Zentralrecheneinheit 25, zum Abrufen zur Verfügung gestellte Computerprogramm-Produkt 17, kann ein Softwareprogramm bzw. können Daten sein, mit welchen mindestens eine Programmmaske 19 (siehe Fig. 3 bis 6) zur Anzeige gebracht werden kann und eine Verbindung zur Zentralrecheneinheit 25 mit der Datenbank 18 hergestellt werden kann. Die Programmmaske 19 kann dabei durch ein auf einem handelsüblichen Personal-Computer installiertes Betriebssystem bzw. einen Internet-Browser, wie beispielsweise "FireFox" oder "Internet Explorer", auf eine mit dem Endgerät 22 verbundene Ausgabevorrichtung ausgegeben werden. Über eine mit dem Endgerät 22 verbundenes Eingabevorrichtung können Daten in die Programmmaske 19 eingetragen werden. Zur Kommunikation zwischen der Zentralrecheneinheit 25 und einem Endgerät 22 ist grundsätzlich jedes Kommunikations-Protokoll denkbar, mit dem die Übertragung von Daten zwischen verschiedenen Recheneinheiten 23 bzw. Servern über ein Datennetzwerk 26 ermöglicht ist. Zum Datenaustausch zwischen den jeweiligen Endgeräten 22 eignet sich somit auch das sogenannte, standardisierte File-Transfer-Protokoll (FTP), das Hypertext Transfer Protokoll (HTTP) in Kombination mit Client- und/oder serverseitig ausführbaren Scripts, wie z.B. Java-Scripts, PHP-Scripts, oder Scripts in ASP-Seiten.

Das Computerprogramm-Produkt 17 ist vorzugsweise durch eine Internetseite 29 (siehe Fig. 3 bis 6) realisiert, die serverseitig ausführbaren Programmcode enthält. Beim Abrufen der Internetseite 29 von der Zentralrecheneinheit 25 bzw. vom Webserver, wird der serverseitig ausführbare Programmcode ausgeführt. Der Programmcode kann zur Anpassung einer Programmmaske 19, die durch eine am Endgerät 22 angeschlossene Ausgabevorrichtung angezeigten wird, und zum Übertragen von Daten, die mit einer am Endgerät 22 angeschlossenen Eingabevorrichtung in die Programmmaske 19 eingegeben werden dienen. Zum Ausführen des serverseitig ausführbaren Programmcodes werden auf der Zentralrecheneinheit 25 bevorzugt Programme eingerichtet, die beispielsweise PHP (Hypertext Preprocessor)-Scripts, Perl-Scripts, CGI (Common Gateway Inerface)-Scripts, ASP(Active Server Page)- oder ASPX - Seiten interpretieren können. Es ist auch möglich, dass die mindestens eine Internetseite 29 mit Programmcode versehen ist, der am Endgerät 22 ausgeführt werden kann, wie beispielsweise ein Java-Script.

Das Computerprogramm-Produkt 17 ist vorzugsweise auf einem Speicher an der Zentralrecheneinheit 25 hinterlegt. Der Speicher kann beispielsweise durch Halbleiterelemente gebildet sein oder ein nicht flüchtiger Datenspeicher in Form einer Festplatte, CD oder DVD sein.

Die Datenhaltung in der Datenbank 18 erfolgt mit beliebigen, aus dem Stand der Technik bekannten Datenbanksystemen, welche auf weitläufig verbreiteten Standardbetriebssystemen ausführbar sind.

Das von der Zentralrecheneinheit 25 zur Verfügung gestellte Computerprogramm-Produkt 17 beinhaltet auch Daten bzw. Programmfünktionen, die nur durch berechtige Personen bzw. Unternehmen 2 abgerufen bzw. ausgeführt werden können. Die Berechtigten Benutzer werden beispielsweise durch die Eingabe einer Benutzerkennung bzw. eines Passwortes festgestellt. Durch die Übermittlung einer Benutzerkennung bzw. eines Passwortes können dann Programmmasken 19 abgerufen werden, die einen gesicherten Bereich darstellen, bzw. kann daraufhin eine gesicherte Internetverbindung hergestellt werden.

In den gemeinsam beschriebenen Fig. 3 bis 6 sind einzelne Programmmasken 19 des Computerprogramm-Produkts 17 dargestellt.

Beispielsweise kann eine erste Programmmaske 19 durch einen sogenannten Hyperlink einer Internetseite aufgerufen werden. Vorteilhaft ist, dass eine erste Programmmaske 19 zur Feststellung des Benutzers der Programmmaske 19 bzw. der Berechtigung zur Benutzung ausgebildet ist. Dies erfolgt durch die Abfrage einer Benutzerkennung und eines Passwortes. Die Eingabe von in der Programmmaske 19 erforderlichen Eingaben erfolgt durch eine an das Endgerät 22 angeschlossene Eingabevorrichtung, insbesondere eine Tastatur, ein sogenanntes Zeigegerät oder eine Maus, bzw. ein Strichcodelesegerät. Durch Absenden einer eingegebenen Benutzerkennung bzw. eines Passwortes vom Endgerät 22 zur Zentralrecheneinheit 25 kann durch die Zentralrecheneinheit 25, vorzugsweise in Kombination mit der Datenbank 18, festgestellt werden, ob der Benutzer bzw. das Unternehmen 2 die Berechtigung hat, weitere Programmmasken 19 aufzurufen bzw. kann je nach Typ des Benutzers bzw. Unternehmens 2, beispielsweise Verpacker bzw. Produktionsunternehmen 8, Poolbetreiber 9 oder Handelsunternehmen 12, eine neue, spezielle Programmmaske 19 von der Zentralrecherieinheit 25 geladen werden bzw. vom Endgerät 22 abgerufen werden. Jede Programmmaske 19 bzw. Rubrik kann dabei aus einem Hauptmenü 30 und einem Untermenü 31 bestehen, wobei das Hauptmenü 30 für die Mehrzahl der Programmmasken 19 annähernd gleich ist und das Untermenü 31 jeweils verschiedene Eingabefelder 32 und Ausgabefelder 33 beinhaltet. Das jeweils angezeigte Untermenü 31 kann im Hauptmenü 30 ausgewählt werden. Vorzugsweise werden Untermenüs 31, in denen verschiedene Datensätze 34 angezeigt werden können, mit Filtermasken 35 ausgestattet. In den Filtermasken 35 können Kriterien eingegeben werden, mit deren Hilfe es möglich ist, die Anzahl der angezeigten Datensätze 34 zu verringern.

Im Hauptmenü 30 können die Untermenüs 31 "Aviso", "Blankoscheine drucken", "Bewegungsübersicht", "Bewegungserfassung", "Bestand", "Optionen"; "Exit" oder "Log out" oder ein Hilfe-Untermenü ausgewählt werden. Im Untermenü "Aviso" können Vorankündigungen von Lieferungen oder offene Bewegungen bzw. Buchungen (Zugänge, Abgänge, Korrekturen) verwaltet werden. Beispielsweise können dort vorangekündigte Zugänge auf ihre Richtigkeit hin überprüft werden und dann bestätigt werden. Eine Lieferung wird hauptsächlich durch ihre Belegnummer 36 identifiziert, wobei in der Belegnummer 36 auch Informationen über den Handelspartner enthalten sein können. Im Untermenü bzw. in der Rubrik "Bewegungserfassung" können Eingänge und Abgänge erfasst werden. Wenn nach Eingabe aller erforderlichen Daten zur Erfassung einer Bewegung die Schaltfläche 37 "Speichern" durch eine Tastatur oder ein Zeigegerät betätigt wird, werden die in den Eingabefeldern 32 eingegebenen Daten von dem Endgerät 22 an die Zentralrecheneinheit 25 bzw. die zentrale Datenbank 18 gesendet. Die gesendeten Daten können dann automatisch überprüft werden und auf einem nicht flüchtigen Speicher gespeichert werden. Vorteilhafterweise erfolgt das Ausdrucken eines sogenannten Emballagenscheines durch Betätigen einer mit einem Druckersymbol versehenen Schaltfläche 38 auf einem mit dem Endgerät 22 direkt oder über das Datennetzwerk 26 verbundenen Drucker. Emballagenscheine können auch in der Datenbank 18 gespeichert werden. Ein Emballagenschein wird mit vorgeschlagenen Einträgen zum Ausdrucken zur Verfügung gestellt, nachdem ein Abgang bestätigt wurde. Im Untermenü oder der Rubrik "Blankoscheine drucken" können nicht oder nur zum Teil ausgefüllte Emballagenscheine in der Datenbank 18 gespeichert bzw. ausgedruckt werden. Die nicht ausgefüllten Emballagenscheine können dann beispielsweise auf Papier händisch ausgefüllt bzw. vervollständigt werden. Im Untermenü oder der Rubrik "Bewegungsübersicht" kann über eine Filtermaske 35 ein Datenfilter bzw. ein Suchprofil eingegeben werden und durch Betätigen der Schaltfläche 39 "Laden" eine Auswahl an Bewegungsdatensätzen 40 angezeigt werden. Weiters können dann die angezeigten Datensätze 34 über eine weitere Schaltfläche 41 in ein anderes Datenverarbeitungsprogramm transferiert werden oder über die Schaltfläche 38 zum Drucken ausgedruckt werden.

In Fig. 3 ist das Hauptmenü 30 des erfindungsgemäßen Computerprogramm-Produkts 17 dargestellt. Über dieses Hauptmenü 30 kann per Eingabevorrichtung am Endgerät 22 bzw. an der Recheneinheit 23, insbesondere per Tastatur oder Zeigevorrichtung wie z.B. eine sogenannte Maus, vom Anwender des Computerprogramm-Produkts 17 zwischen den einzelnen Programmfunktionen "Aviso", "Blankoscheine drucken", "Bewegungsübersicht", "Bewegungserfassung", "Bestand", "Optionen" und "Exit" ausgewählt werden. Ausgehend von diesem Hauptmenü 30 für die Auswahl der einzelnen zuvor genannten Funktionen gelangt man bei Betätigung einer der Schaltflächen 42, welche Menüpunkte 43 darstellen, in einzelne Untermenüs 31, die beispielsweise unterhalb des Hauptmenüs 30 dargestellt werden.

In diesen Untermenüs 31 oder Rubriken können je nach dem vorgesehenen Verwendungszweck verschiedene Einstellungen vorgenommen werden, Funktionen ausgeführt und/oder relevante Daten eingesehen oder eingegeben werden.

Weiters stellt das Computerprogramm-Produkt 17 eine Schaltfläche 44 zur Verfügung, insbesondere in Form einer Log-Out- oder Exit -Schaltfläche, mit der ein passwortgeschützter Bereich des Computerprogramm-Produkts 17 oder eine sichere Internetverbindung bzw. Datenübertragung 28 getrennt werden kann.

Alle häufig benötigten Programmfunktionen wie "Aviso", "Blankoscheine drucken", "Bewegungsübersicht","Bewegungserfassung","Bestand","Optionen","Exit" oder "Log-Out" und eine Programmfunktion zum Anzeigen eines Hilfetextes sind über einzelne Schaltflächen 42 bzw. Menüpunkte 43 im Hauptmenü 30 aufrufbar. Die Programmfunktionen "Exit" und "Hilfe" sind jeweils über eine Exit-Schaltfläche 44 bzw. über eine Hilfe-Schaltfläche 45 aufrufbar.

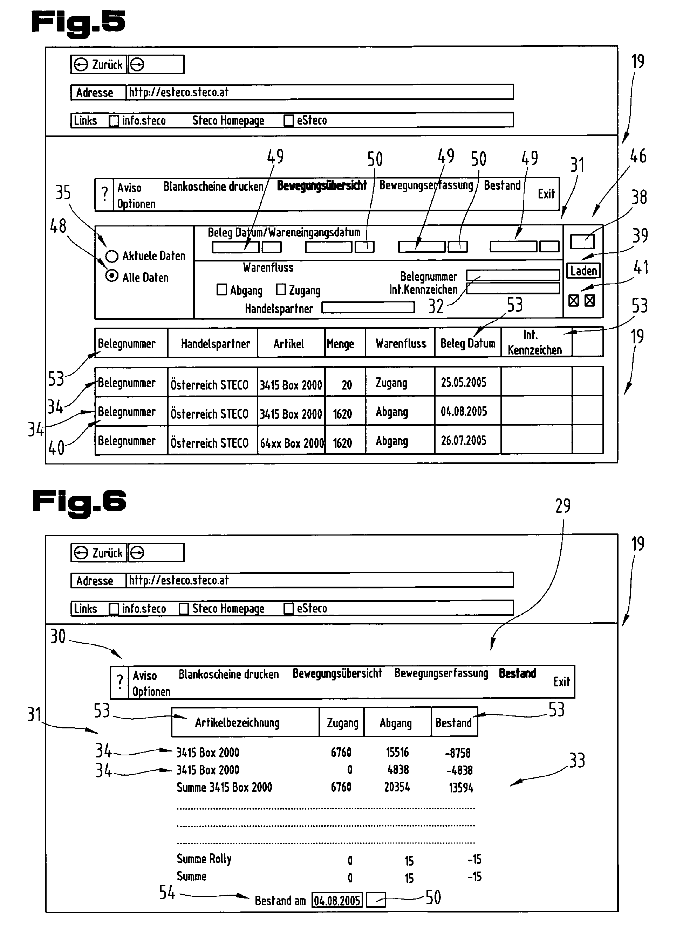

Fig. 5 zeigt das Untermenü 31 bzw. die Rubrik für die Erfassung der Bewegungen von Waren bzw. Mehrwegprodukten 3, insbesondere von Mehrweg-Transportverpackungen 4. Wesentlich ist dabei, dass diese Rubrik für sämtliche Unternehmen 2 zu einem großen Teil einheitlich gestaltet ist. Insbesondere ist ein Eingabefenster 46 sowohl für die Poolbetreiber 9, als auch für die Verpackungs- und/oder Produktionsunternehmen 8 sowie für die Handelsunternehmen 12 gleich aufgebaut. Über diese für alle Unternehmen 2 im Wesentlichen einheitliche Programmfunktion bzw. Programmmaske "Bewegungserfassung", werden die Bewegungsdaten für die jeweiligen Mehrweg-Transportverpackungen 4 erstellt. In dieser Rubrik sind eine Reihe von Eingabefeldern 32 betreffend "Artikel", "Handelspartner", "Bemerkung", "Kennzeichen", "Europaletten", "Warenfluss", "Menge", "Belegnummer" und "Datum" vorgesehen. Im Eingabefeld für "Artikel" ist dabei jener Artikel bzw. jene Ware anzugeben, welche abgesandt bzw. erhalten wurde. Hierzu ist in dieses Eingabefeld 32 die entsprechende Artikelnummer und/oder eine Artikelbezeichnung einzugeben bzw. auszuwählen. In einem weiteren Eingabefeld 32 zur Bildung des Bewegungsdatensatzes 40 ist jener Handelspartner einzugeben, an welchen die Waren und/oder die Mehrweg-Transportverpackungen 4 ausgeliefert werden bzw. ist hier jener Handelspartner festzuhalten, von welchem die Waren bzw. Mehrweg-Transportverpackungen 4 erhalten wurden. Hierbei sind entweder Kunden- bzw. Lieferantenkurznummern und/oder deren Bezeichnung bzw. Kurzname einzugeben oder auszuwählen. Zur Erleichterung der Eingabearbeit kann eine automatische Vervollständigungsroutine zumindest für jene Eingabefelder 32 vorgesehen sein, bei welchen umfangreiche Eingaben erforderlich wären bzw. bei welchen eine mit hoher Wahrscheinlichkeit voraussehbare Eingabe gegeben ist.

In einem Feld "Int. Kennzeichnung" kann ein Versender ein internes Kennzeichen eingeben, mit dem der Empfänger einen Bezug zu einem Auftrag im eigenen Warenwirtschafssystem herstellen kann.

Für die zuvor genannten Eingabefelder 32 "Artikel" und Handelspartner sind außerdem korrespondierende Auswahllisten 47 vorgesehen, über welche aus vordefinierten, aufgelisteten Möglichkeiten der entsprechende Eintrag per Tastendruck oder Mausklick ausgewählt werden kann.

Die Eingabefelder 32 und Auswahllisten 47 reagieren dabei auf die Eingabe eines gültigen Wertes automatisch mit einem Cursorsprung in das nächste Eingabefeld 32. Dadurch ist eine zusätzliche Betätigung einer Eingabe- bzw. Return-Taste der Recheneinheit 23 erübrigt und somit eine Grundlage für eine zügige und einfache Datenerfassung geschaffen.

Von besonderem Vorteil bei der Programmfunktion "Bewegungserfassung" ist weiters, dass je nach Auswahl oder Eingabe eines Handelspartners automatisch die standardmäßige Richtung des Warenflusses 5 vorgeschlagen wird. So wird z.B. bei Auswahl eines Lieferanten im entsprechenden Eingabefeld 32 eine spezielle, automatische Optionsschaltfläche 48 betreffend "Warenfluss" selbsttätig auf "Zugang" geschaltet. Bei Eingabe eines beliebigen Kunden im entsprechenden Eingabefeld 32 oder per Auswahlliste 47 wird die diesbezüglich standardmäßige Richtung des Warenflusses 5 bei der Optionsschaltfläche 48 betreffend "Warenfluss" auf "Abgang" gesetzt. Dadurch wird in vorteilhafter Weise der Aufwand für die Dateneingaben deutlich reduziert.

Der standardmäßige Vorschlag für den Warenfluss 5 kann insbesondere für den Fall von Reklamationen bzw. Rücksendungen an das im Warenfluss 5 vorgeordnete Unternehmen 2 manuell adaptiert werden, sodass auch diesen Fallgestaltungen Rechnung getragen werden kann.

In einem weiteren Eingabefeld 32 für "Menge" ist die bewegte Menge von Mehrweg-Transportverpackungen 4 einzugeben. Diesem Eingabefeld 32 für "Menge" kann ein Ausgabefeld 33 für den aktuellen Lagerbestand der bewegten Ware bzw. Mehrweg-Transportverpackung 4 zugeordnet sein. Dadurch kann eine Kontrollroutine überprüfen, ob die eingegebene Menge an bewegter Mehrweg-Transportverpackung 4 nicht größer ist als der Lagerbestand. In diesem Fall wird die eingegebene Anzahl vom erfindungsgemäßen Computerprogramm-Produkt 17 nicht angenommen und insbesondere als fehlerhafte Dateneingabe erkannt. Bei einem Warenabgang wird dann eine Prüfung der maximal möglichen Menge durch die entsprechende Kontrollfunktion des erfindungsgemäßen Computerprogramm-Produkts 17 vorgenommen, nachdem der Abgang eines bestimmten Artikels nicht größer sein kann als der Lagerbestand.

Eventuell vorhandene Differenzen im Lagerbestand können durch eine Lagerkorrektur ausgeglichen werden. Eine Lagerkorrektur kann durch die Erstellung eines entsprechenden Bewegungsdatensatzes 40 mit Eingabe des eigenen Unternehmens 2 im Eingabefeld 32 für Handelspartner erfolgen. Eine derartige Lagerkorrektur ist z.B. erforderlich, wenn bestimmte Mehrwegprodukte 3 bzw. Mehrweg-Transportverpackungen 4 im jeweiligen Unternehmen 2 irreparabel beschädigt wurden und vernichtet werden mussten.

Bevorzugt ist in der Eingabemaske "Bewegungserfassung" - Fig. 4 - ein weiteres Eingabefeld 32 für "Belegnummer" vorgesehen. Darin ist die eindeutige Bezeichnung bzw. Nummer jenes Beleges bzw. jener Unterlagen anzugeben, mit welchen der Umschlag der erhaltenen bzw. ausgelieferten Mehrweg-Transportverpackungen 4 dokumentiert ist. Im einfachsten Fall sind diese Dokumente bzw. Unterlagen durch die sogenannten Frachtpapiere gebildet. Das Eingabefeld 32 für "Belegnummer" ist jedoch bevorzugt ein optionales Eingabefeld 32.

Ein vollständiger Bewegungsdatensatz 40 wird durch wenigstens ein Eingabefeld 32 für das "Wareneingangsdatum" oder "Belegdatum" komplettiert. In ein Datumseingabefeld 49 kann das Datum, insbesondere das Datum an dem die Mehrweg-Transportverpackung 4 erhalten bzw. ausgeliefert wurde, eingegeben werden. Die Eingabe wird dabei durch eine Kalenderfunktion unterstützt. Diese Kalenderfunktion ist durch eine gesonderte Schaltfläche 50, genannt "Kalender", aufrufbar.

Unabhängig davon ist eine weitere Schaltfläche 51 genannt "Speichern" oder "Absenden" in der Programmmaske 19 für die Bewegungsdatensätze 40 ausgebildet. Bei Betätigung dieser Schaltfläche 51 wird der erfasste Bewegungsdatensatz 40 an die Zentralrecheneinheit 25 bzw. die Datenbank 18 gesendet und dort auf einem Speichermedium hinterlegt. Wesentlich ist dabei, dass die Schaltfläche 51 für "Speichern" oder "Absenden" erst aktivierbar wird, sobald alle zwingend erforderlichen Daten für einen kompletten Bewegungsdatensatz 40 eingegeben sind und die einzelnen Einträge grundsätzlich Gültigkeit haben können.

Die Programmfunktion "Bewegungserfassung" kann außerdem eine Schaltfläche 52, genannt "Zurücksetzen", umfassen, über welche die einzelnen Eingaben in den diversen Eingabefeldern 32 gelöscht werden können.

Fig. 5 zeigt ein weiteres Untermenü 31 bzw. eine andere Rubrik des Computerprogramm-Produkts 17. Diese Rubrik kann als "Bewegungsübersicht" bezeichnet werden und stellt eine Auflistung der zuletzt erfassten Bewegungen der Mehrweg-Transportverpackungen 4 dar. Aus dieser Programmmaske 19 "Bewegungsübersicht" sind insbesondere folgende Daten bzw. Einträge entnehmbar:
- "Datum" für den Tag, an dem die Auslieferung oder die Entgegennahme der Mehrweg-Transportverpackung 4 stattgefunden hat;
- "Artikel" umfasst die Artikelnummer und/oder Artikelbezeichnung als Klartext;
- "Handelspartner" umfasst eine entsprechende Kunden- bzw. Lieferantennummer und/oder die Klartextbezeichnung des Handelspartner;
- "Belegnummer" dient zur Identifikation jenes Beleges, auf welchem zusätzliche Bewegungsdaten oder sonstige Daten der Mehrweg-Transportverpackung 4 dokumentiert sind;
- "Warenfluss" als Anzeige für den Zu- oder Abgang von Mehrweg-Transportverpackungen 4;
- "Menge" für die Anzahl an bewegter Mehrweg-Transportverpackung 4;
- "Int. Kennzeichen" um einen Bezug zu einem Auftrag herstellen zu können.

Die Sortierung bzw. Gruppierung der einzelnen Bewegungsdatensätze 40 erfolgt standardmäßig nach absteigendem Bewegungsdatum. Durch Anklicken einer bestimmten Spaltenüberschrift 53 kann die standardmäßige Sortierung jederzeit wunschgemäß abgeändert werden.

Zusätzlich besteht die Möglichkeit, durch die Verwendung von Datenfiltern bzw. Filtermasken 35 für "Belegnummer", "Artikel", "Int. Kennzeichnung", "Warenfluss", "Zeitraum für Buchungsdatum", "Wareneingangsdatum", "Belegdatum" sowie "Handelspartner" die Gesamtzahl der Bewegungsdatensätze 40 wunschgemäß einzugrenzen. Durch das Betätigen der Schaltfläche 39 "Laden" werden die betreffenden Daten der Datenbank 18 abgefragt und angezeigt.

Durch eine Schaltfläche 38, die mit einem Druckersymbol gekennzeichnet ist, können die angezeigten Daten auf einem mit dem Endgerät 22 verbunden Drucker ausgedruckt werden. Durch das Betätigen einer weiteren Schaltfläche 41 können die angezeigten Daten zu einem weiteren Computerprogramm exportiert werden bzw. in einem geänderten Datenformat auf einem lokalen Speicher abgelegt werden.

Fig. 6 zeigt ein weiteres Untermenü 31 bzw. eine andere Rubrik des Computerprogramm-Produkts 17. Diese Programmmaske 19 kann als Auswertemaske bezeichnet werden und stellt eine Auflistung der Bestände des jeweiligen Unternehmens 2 getrennt nach den jeweiligen Artikeln bzw. Arten von Mehrweg-Transportverpackungen 4 dar. Die Programmfunktion "Bestand" enthält insbesondere nachfolgende Einträge:
- "Lager" für die jeweilige Lagernummer und/oder Lagerbezeichnung;
- "Artikel-Bezeichnung" definiert die Artikelnummer und/oder Artikelbezeichnung der eingelagerten Mehrweg-Transportverpackungen 4;
- "Bestand" gibt den aktuellen Systembestand für den jeweiligen Artikel des jeweiligen Unternehmens 2 an;
- "Abgang" zeigt die Menge an abgegangenen Mehrweg-Transportverpackungen 4
- "Zugang" zeigt die Menge an abgegangenen Mehrweg-Transportverpackungen 4

Durch ein Feld 54 "Bestand am" kann ein Datum eingegeben bzw. ausgewählt werden und so der Bestand zu diesem Zeitpunkt zur Anzeige gebracht werden.

Es wird zwischen Unternehmen 2, die typenrein und Unternehmen 2, die Sammelartikel buchen, unterschieden. Unter Unternehmen 2, die typenrein buchen, sind Unternehmen 2 zu verstehen, die bei Zugängen bzw. Abgängen den Typ der Mehrweg-Transportverpackungen 4 mitverbuchen. Unternehmen 2, die Sammelartikel buchen, unterscheiden nicht jeden einzelnen Typ einer Mehrweg-Transportverpackung 4, sondern fassen beim Buchen mehrere Typen zu einer Typengruppe zusammen - unterscheiden also beispielsweise nur zwischen großen und kleinen Mehrweg-Transportverpackungen 4. Das Computerprogramm-Produkt 17 ist dafür ausgebildet, zwischen Unternehmen 2, die typenrein und Unternehmen 2, die Sammelartikel buchen, zu unterscheiden. Hierfür können für Unternehmen 2 mit unterschiedlicher Buchungsart unterschiedliche Programmmasken 19 angezeigt werden, insbesondere können bei typenreinen Büchern die Artikel im Untermenü 31 "Bestand" geordnet nach den verschiedenen Typen von Mehrweg-Transportverpackungen 4 angezeigt werden.

Auch hierbei können die Auflistungen durch Anklicken der diversen Spaltenüberschriften 53 wunschgemäß in aufsteigender oder absteigender Reihenfolge gereiht werden.

Diese Lagerbestandsverwaltung ist vor allem für die dem Poolbetreiber 9 nachgeordneten Unternehmen 2, insbesondere für die Verpackungs- und/oder Produktionsunternehmen 8 sowie für die Handelsunternehmen 12 von Vorteil. Die EDV-unterstützte Lagerbestandsver- waltung ist also vor allem für die Verpackungs- und/oder Produktionsunternehmen 8 sowie für die Handelsunternehmen 12 nützlich, während der Hauptnutzen der Datenerfassung und Datenübertragung 28 vorwiegend dem Poolbetreiber 9 zugute kommt.

Das vorstehend geschilderte Computerprogramm-Produkt 17 ist erforderlich, um die einleitend beschriebene Methode zur Erfassung und Überwachung der Bewegungsverläufe von Produkten, im Speziellen aber von Mehrweg-Transportverpackungen 4 ausführen zu können.

Der Ordnung halber sei abschließend darauf hingewiesen, dass zum besseren Verständnis des erfindungsgemäßen Systems bzw. der Verfahrensschritte die zeichnerischen Darstellungen relativ abstrakt dargestellt wurden.

Die den eigenständigen erfinderischen Lösungen zugrundeliegende Aufgabe kann der Beschreibung entnommen werden.

Vor allem können die einzelnen in den Fig. 1; 2; 3, 4, 5, 6 gezeigten Schritte und Maßnahmen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Warenkreislauf
- 2: Unternehmen
- 3: Mehrwegprodukt
- 4: Mehrweg-Transportverpackung
- 5: Warenfluss
- 6: Ausgangspunkt
- 7: Rücksendung
- 8: Produktionsunternehmen
- 9: Poolbetreiber
- 10: Erzeugnis
- 11: Anbauprodukt
- 12: Handelsunternehmen
- 13: Netzwerk
- 14: Transportunternehmen
- 15: Reinigungsunternehmen
- 16: Datenaustauschsystem
- 17: Computerprogramm-Produkt
- 18: Datenbank
- 19: Programmmaske
- 20: Einrichtung
- 21: Steuergerät
- 22: Endgerät
- 23: Recheneinheit
- 24: Kommunikationsmedium
- 25: Zentralrecheneinheit
- 26: Datennetzwerk
- 27: Internet
- 28: Datenübertagung
- 29: Internetseite
- 30: Hauptmenü
- 31: Untermenü
- 32: Eingabefeld
- 33: Ausgabefeld
- 34: Datensatz
- 35: Filtermaske
- 36: Belegnummer
- 37: Schaltfläche
- 38: Schaltfläche
- 39: Schaltfläche
- 40: Bewegungsdatensatz
- 41: Schaltfläche
- 42: Schaltfläche
- 43: Menüpunkt
- 44: Schaltfläche
- 45: Schaltfläche
- 46: Eingabefenster
- 47: Auswahlliste
- 48: Optionsschaltfläche
- 49: Datumseingabefeld
- 50: Schaltfläche
- 51: Schaltfläche
- 52: Schaltfläche
- 53: Spaltenüberschrift
- 54: Feld

## Patentansprüche

1. Datenaustauschsystem (16) für die fortlaufende Erfassung bzw. Steuerung von Warenflüssen (5) zwischen mehr als zwei Unternehmen (2) mit einem im Regelfall unidirektionalen Kreislauf (1) von Waren, wobei jedes der in den Warenkreislauf (1) einbezogenen Unternehmen (2) mit zumindest einem elektronischen Endgerät (22) zum Absenden und Empfangen von Daten ausgestattet ist, **dadurch gekennzeichnet, dass** das elektronische Endgerät (22) zumindest fallweise mit einer Zentralrecheneinheit (25) verbunden ist, welche mindestens ein Computerprogramm-Produkt (17) zur Verfügung stellt, mit dem eine zentrale Datenbank (18) über ein Kommunikationsmedium (24), insbesondere via Internet (27), geändert bzw. gelesen werden kann, und welche Datenbank (18) Daten betreffend Eingänge und/oder Abgänge von Mehrweg-Transportverpackungen (4), insbesondere Kisten, Trays, Stapelzwischenlagen, Paletten oder dgl., sowie Daten von in den Warenkreislauf einbezogenen Unternehmen (2) enthält, wobei Daten getätigter oder vorgesehener zukünftiger Lieferungen oder von Lagerbeständen von Mehrweg-Transportverpackungen (4) mit oder ohne Erzeugnis (10) eines ersten Unternehmens (2) zumindest einem weiteren Unternehmen (2), vorzugsweise einem dem ersten Unternehmen (2) im Warenfluss (5) vor- oder nachgeordneten Unternehmen (2), mittels der Datenbank (18) und/oder dem Computerprogramm-Produkt (17) bereitgestellt sind.

2. Datenaustauschsystem nach Anspruch 1, **dadurch gekennzeichnet, dass** die Unternehmen (2) durch wenigstens einen Poolbetreiber (9) und Besitzer der Mehrweg-Transportverpackung (4), durch wenigstens ein Verpackungs- und/oder Produktionsunternehmen (8), beispielsweise einen Landwirt, und durch wenigstens ein Handelsunternehmen (12), wie z.B. eine Großmarktkette, definiert sind.

3. Datenaustauschsystem nach Anspruch 2, **dadurch gekennzeichnet, dass** der bevorzugte Warenkreislauf (1) durch Warenflüsse (5) ausgehend vom Poolbetreiber (9) zum Verpackungs- und/oder Produktionsunternehmen (8), weiter zum Handelsunternehmen (12) und zurück zum Poolbetreiber (9) definiert ist.

4. Datenaustauschsystem nach einem der vorhergehenden Ansprüche, **dadurch gekennzeichnet, dass** die zumindest fallweise Verbindung des Endgerätes (22) mit der Zentralrecheneinheit (25) zumindest teilweise über ein globales Kommunikationsmedium (24), insbesondere über das Internet (27), hergestellt ist.

5. Datenaustauschsystem nach einem der vorhergehenden Ansprüche, **dadurch gekennzeichnet, dass** die zumindest fallweise Verbindung des Endgerätes (22) mit der Zentralrecheneinheit (25) zumindest teilweise über ein drahtloses Kommunikationsmedium (24), insbesondere durch ein einen GSM-, UMTS-, GPRS-, EDGE-, MMS-, SMS-, HSCSD-, WAP-, Blutetooth-Standard oder einen Standard der IEEE 802.11-Familie ausnützendes Kommunikationsmedium (24), hergestellt ist.

6. Datenaustauschsystem nach einem der vorhergehenden Ansprüche, **dadurch gekennzeichnet, dass** die Zentralrecheneinheit (25) mit einem Webserver ausgestattet ist und das zur Verfügung gestellte Computerprogramm-Produkt (17) für die Unternehmen (2) eine Software, insbesondere eine Software in Form mindestens einer Internetseite (29), die bevorzugt serverseitig ausführbaren Programmcode enthält, gebildet ist, durch die die Datenbank (18) geändert bzw. gelesen werden kann.

7. Datenaustauschsystem nach einem der vorhergehenden Ansprüche, **dadurch gekennzeichnet, dass** das mindestens eine elektronische Endgerät (22) durch eine Recheneinheit (23), insbesondere durch einen Personal-Computer, gebildet ist.

8. Datenaustauschsystem nach einem der vorhergehenden Ansprüche, **dadurch gekennzeichnet, dass** das mindestens eine elektronische Endgerät (22) durch eine mobile Recheneinheit (23), insbesondere einen Laptop, PDA (Personal Digital Assistant), MDA (Mobile Digital Assistant), Handheld, Wristtop-Computer oder ein Mobiltelefon, gebildet ist.

9. Datenaustauschsystem nach einem der vorhergehenden Ansprüche, **dadurch gekennzeichnet, dass** zumindest fallweise eine Einrichtung (20) zur Herstellung, zur Reinigung, zur Handhabung, zum Verpacken, zum Verschicken, zum Bearbeiten und/oder zum Entsorgen von Mehrweg-Transportverpackungen (4) bzw. ein Steuergerät (21) für die Einrichtung (20) mit dem Endgerät (22) oder mit der Zentralrecheneinheit (25) verbunden ist.

10. Datenaustauschsystem nach Anspruch 9, **dadurch gekennzeichnet, dass** die Einrichtung (20) bzw. das Steuergerät (21) einen Zugriff auf die Daten der Datenbank (18) hat.

11. Datenaustauschsystem nach einem der vorhergehenden Ansprüche, **dadurch gekennzeichnet, dass** das Computerprogramm-Produkt (17) bzw. die Software mindestens eine Programmmaske (19) zur Eingabe und/oder Ausgabe von Daten zumindest betreffend Lieferungen oder einen Lagerbestand aufweist.

12. Datenaustauschsystem nach Anspruch 11, **dadurch gekennzeichnet, dass** die Programmmaske (19) zur Eingabe oder Ausgabe von Daten betreffend einen zukünftigen Eingang oder Abgang von Mehrweg-Transportverpackungen (4) ausgebildet ist.

13. Datenaustauschsystem nach einem der vorhergehenden Ansprüche, **dadurch gekennzeichnet, dass** das von der Zentralrecheneinheit (25) bereitgestellte Computerprogramm-Produkt (17) dazu ausgebildet ist, eine Nachricht eines ersten Unternehmens (2) in die Datenbank zu schreiben und die Nachricht einem zweiten Unternehmen (2), welches aufgrund einer Benutzerkennung und/oder eines Passwortes zum Abfragen dieser Nachricht berechtigt ist, bereitstellt.

14. Datenaustauschsystem nach Anspruch 13, **dadurch gekennzeichnet, dass** das Computerprogramm-Produkt (17), insbesondere die Software, einen Menüpunkt aufweist, durch den bereitgestellte Nachrichten auf einem Anzeigegerät, insbesondere einem Bildschirm, dargestellt werden können.

15. Verfahren zum Austausch von Daten für die fortlaufende Erfassung der Warenflüsse zwischen mehr als zwei Unternehmen mit einem im Regelfall unidirektionalen Kreislauf der Waren **gekennzeichnet, durch** (a) Aufrufen eines Computerprogramm-Produkts (17) von einer Zentralrecheneinheit (25) zum Bearbeiten bzw. Lesen einer zentralen Datenbank (18) mittels zumindest einem elektronischen Endgerät (22), (b) Eingabe von Daten eingegangener, abgeschickter oder lagernder Waren, insbesondere Mehrweg-Transportverpackungen mit oder ohne Erzeugnisse (10) auf dem zumindest einem elektronischen Endgerät (22), (c) Senden der Daten an die zentrale Datenbank (18).

16. Verfahren zum Austausch von Daten nach Anspruch 15, **dadurch gekennzeichnet, dass** die Daten in der Datenbank (18) durch zumindest ein Endgerät (22) oder Steuergerät (21) eines zweiten, berechtigten Unternehmens (2), insbesondere einem Unternehmen (2), welches einem ersten Unternehmen (2) im Warenfluss (5) vor- oder nachgeordnet ist, erfasst werden.

17. Verfahren zum Austausch von Daten nach Anspruch 15 oder 16, **dadurch gekennzeichnet, dass** die Daten durch das zumindest eine Endgerät (22) oder Steuergerät (21) an ein Ausgabegerät, insbesondere an einen Bildschirm, einen Drucker oder ein Display, und/oder an eine Einrichtung (20), die Mehrweg-Transportverpackungen (4) herstellt, reinigt, handhabt, verpackt, verschickt, bearbeitet oder entsorgt, angepasst und weitergegeben werden.

18. Verfahren zum Austausch von Daten nach einem der Ansprüche 15 bis 17, **dadurch gekennzeichnet, dass** das Computerprogramm-Produkt (17) von der Zentralrecheneinheit (25) bzw. von einer auf der Zentralrecheneinheit (25) ausgeführten Software vor dem Verschicken an ein Endgerät (22) verändert wird.

19. Verfahren zum Austausch von Daten nach einem der Ansprüche 15 bis 18, **dadurch gekennzeichnet, dass** durch das Computerprogramm-Produkt (17) bzw. die Software nur einem zuvor in einer Filtermaske (35) festgelegten Kriterium genügende Daten aus der Datenbank (18) zum Endgerät (22) übertragen werden.

20. Verfahren zum Austausch von Daten nach einem der Ansprüche 15 bis 19, **dadurch gekennzeichnet, dass** allen erfolgreich übertragenen Daten bzw. Datensätzen (34) eine unverkennbare, eindeutige Transferidentifikation zugeordnet wird.

21. Verfahren zum Austausch von Daten nach einem der Ansprüche 15 bis 20, **dadurch gekennzeichnet, dass** alle Datenzugriffe und Fehler einer Datenübertragung (28) in einem Statusbericht auf einem nicht flüchtigen Schreib- und Lesespeicher, insbesondere auf einer Festplatte, gespeichert werden.

22. Verfahren zum Austausch von Daten nach einem der Ansprüche 15 bis 21, **dadurch gekennzeichnet, dass** nach Auswahl oder Eingabe eines Kunden oder Lieferanten in der Programmmaske (19) für die Datensätze (34) automatisch die standardmäßige Richtung des Warenflusses (5) vorgeschlagen wird.

23. Verfahren zum Austausch von Daten nach einem der Ansprüche 15 bis 22, **dadurch gekennzeichnet, dass** der Lagerbestand an Mehrweg-Transportverpackungen (4) eines Unternehmens (2) zumindest teilweise automatisiert festgestellt wird.

24. Verfahren zum Austausch von Daten nach einem der Ansprüche 15 bis 23, **dadurch gekennzeichnet, dass** für ein oder mehrere Unternehmen (2) ein Solllagerbestand festgelegt wird und bei Unterschreitung des Solllagerbestandes zumindest teilweise automatisiert Mehrweg-Transportverpackungen (4) an das Unternehmen geschickt werden.

25. Verfahren zum Austausch von Daten nach einem der Ansprüche 15 bis 24, **dadurch gekennzeichnet, dass** bei einer Warenbestellung eines Handelsunternehmen (12) bei einem Verpackungs- und/oder Produktionsunternehmen (8) zumindest teilweise automatisiert festgestellt wird, ob beim Verpackungs- und/oder Produktionsunternehmen (8) ausreichend Mehrweg-Transportverpackungen (4) für die Abwicklung der Warenbestellung vorhanden sind und dem Verpackungs- und/oder Produktionsunternehmen (8) bei Bedarf oder Mangel an Mehrweg-Transportverpackungen (4) zumindest teilweise automatisiert Mehrweg-Transportverpackungen (4) geliefert werden.

26. Verfahren zum Austausch von Daten nach einem der Ansprüche 15 bis 25, **dadurch gekennzeichnet, dass** ein Unternehmen (2), das einen Bedarf an Mehrweg-Transportverpackungen (4) hat, von einem Unternehmen (2), das einen Überschuss an Mehrweg-Transportverpackungen (4) hat, unter Berücksichtigung einer mittels der Datenbank (18) ermittelten geografischen Nahebeziehung beliefert wird.
